# EUROPEAN PATENT SPECIFICATION

(11) **EP 3 278 662 B1**
(45) Date of publication and mention of the grant of the patent: **22.05.2019**
(21) Application number: 16897468.1
(22) Date of filing: 24.06.2016
(51) Int. Cl.: A01K 61/00, A01K 61/60

(54) **HALF-SUBMERGED DEEP-SEA AQUACULTURE CAGE COMBINING WAVE POWER AND SOLAR POWER GENERATION**
HALB EINGETAUCHTER TIEFSEE-AQUAKULTURKÄFIG MIT EINER KOMBINATION AUS WELLENENERGIE UND SOLARENERGIEERZEUGUNG
CAGE D'AQUACULTURE DE HAUTE MER SEMI-SUBMERGÉE COMBINANT LA GÉNÉRATION D'ÉNERGIE HOULOMOTRICE ET D'ÉNERGIE SOLAIRE

(30) Priority: 26.05.2016 CN 201610365276
(43) Date of publication of application: 07.02.2018
(73) Proprietor: Guangzhou Institute of Energy Conversion, Chinese Academy of Sciences, Guangzhou Guangdong 510640 (CN)
(72) Inventor: SHENG, Songwei, Guangzhou, Guangdong 510640 (CN); WANG, Kunlin, Guangzhou, Guangdong 510640 (CN); LIN, Hongjun, Guangzhou, Guangdong 510640 (CN); ZHANG, Yaqun, Guangzhou, Guangdong 510640 (CN); YOU, Yage, Guangzhou, Guangdong 510640 (CN); WANG, Zhenpeng, Guangzhou, Guangdong 510640 (CN)
(74) Representative: Hanna Moore + Curley
(86) International application number: PCT/CN2016/087091
(87) International publication number: WO 2017/201794

(56) References cited:
- CN-A- 101 133 724
- CN-A- 101 617 637
- CN-A- 102 060 087
- CN-A- 103 523 183
- CN-A- 103 548 734
- DE-A1- 3 015 372
- KR-A- 20150 003 965
- US-A1- 2006 062 676

## Description

### TECHNICAL FIELD

The present invention relates to the technical field of renewable energy power generation, and particularly to a semisubmersible open sea aquaculture cage with combined wave and solar power generation.

### BACKGROUND ART

With vigorous development of marine aquaculture industries for the past 20 years, coastal countries have continually built aquaculture cages of various types in the bays, resulting in serious problems such as excessive aquaculture, water pollution, and frequent occurrence of fish diseases. Governments and fish farmers have been actively promoting open sea aquaculture, but have had little success due to the following reasons: 1. In open sea, conventional cages cannot survive in high wind and rough sea conditions as they are simple in structure and consist of weak materials, and may be destroyed in a big storm, causing heavy loss to the fish farmers. 2. Conventional cages are neither suitable for people to live on, nor for the storage of supplies such as feeds, such that the cost are greatly increased due to daily long-distance shipping of the people and supplies. 3. Due to the lack of conventional power supply on the open sea cages, low efficiencies of the equipments has limited the large-scale production of aquaculture industries, the use of fuel power generation will not only pollute the water but also make huge noise, affecting the growth of fish and the living of the farmers.

The relevant state of the art is represented by US 2006/062676 A1 and DE 3015372 A1.

### SUMMARY OF THE INVENTION

The present teaching provides a semisubmersible open sea aquaculture cage with combined wave and solar power generation as detailed in claim 1. Advantageous features are provided in dependent claims.

In view of shortcomings of the prior art, an object of the present invention is to provide a semisubmersible open sea aquaculture cage with combined wave and solar power generation, which can travel from bays to open seas, and solves the problems of aquaculture cages, such as the low efficiency of power supply, being unable to carry fisher machineries, being unable to work in high wind and rough sea conditions, and being unable to travel fast, which have hindered the development of open sea aquaculture for a long time.

In order to achieve the above object, a technical solution adopted by the present invention is as follows.

Provided is a semisubmersible open sea aquaculture cage with combined wave and solar power generation which comprises a semisubmersible hull main structure, an aquaculture cage structure, a renewable energy power generation system, and an anchoring system.

The semisubmersible hull main structure is configured to serve as a carrier for the aquaculture cage structure, the renewable energy power generation system, and the anchoring systems, and comprises a plurality of compartments wherein rising and submerging of the semisubmersible open sea aquaculture cage is controlled by adjusting ballast water volume in each of the compartments.

The aquaculture cage structure comprises vertical net structures and bottom net structures, the vertical net structures and the bottom net structures being connected to the semisubmersible hull main structure to form netcages having bottom surfaces and vertical surfaces but without a top surface.

The renewable energy power generation system comprises a wave power generation system and a solar power generation system, wherein the wave power generation system is disposed at front and back ends of the semisubmersible hull main structure, and the solar power generation system is disposed at a top of the semisubmersible hull main structure.

The anchoring system is disposed at four corners of the top of the semisubmersible hull main structure.

Compared with the prior art, the present invention has the following advantages.

The semisubmersible open sea aquaculture cage with combined wave and solar power generation of the present invention is superior to the conventional aquaculture cages in that:
1. In the present invention, structural parts made of steel are applicable, and a frame-based main structure is adopted, resulting in a reduction in consumption of materials and a simple construction. If the aquaculture cage is constructed according to shipbuilding standards, the service life thereof can reach 25 to 30 years, which can solve the problem that the aquaculture cages of prior art have a service life of only one to two years.
2. As the semisubmersible aquaculture cage can move like a ship, if there is a natural disaster such as a typhoon, it can be transferred to another place to avoid it just like what a normal ship does, which can solve the problem that the fish yield will be greatly decreased once there is a storm.
3. Wave and solar power generation being both integrated into the cage, on-site resources are utilized to realize complementary power supply of renewable energy sources and the use of clean power, which can solve the power shortage on open sea cages. Moreover, since wave power generation helps reducing the energy of the waves, the reliability and stability of the cage are improved.
4. When floating on the sea, the present invention is a boat which can be towed, repaired and maintained such that clean-up and disinfection can be carried out, and when submerging, the present invention turns into an open sea netcage, which make the present invention much more convenient.

### BRIEF DESCRIPTION OF THE DRAWINGS

Fig. 1 is a side view of a semisubmersible open sea aquaculture cage with combined wave and solar power generation of the present invention;
Fig. 2 is a top view of the semisubmersible open sea aquaculture cage with combined wave and solar power generation of the present invention;
Fig. 3 shows a side view and a top view of section A-A in Fig. 1;
Fig. 4 shows a side view and a top view of section B-B in Fig. 1;
Fig. 5 shows a side view and a top view of section C-C in Fig. 1;

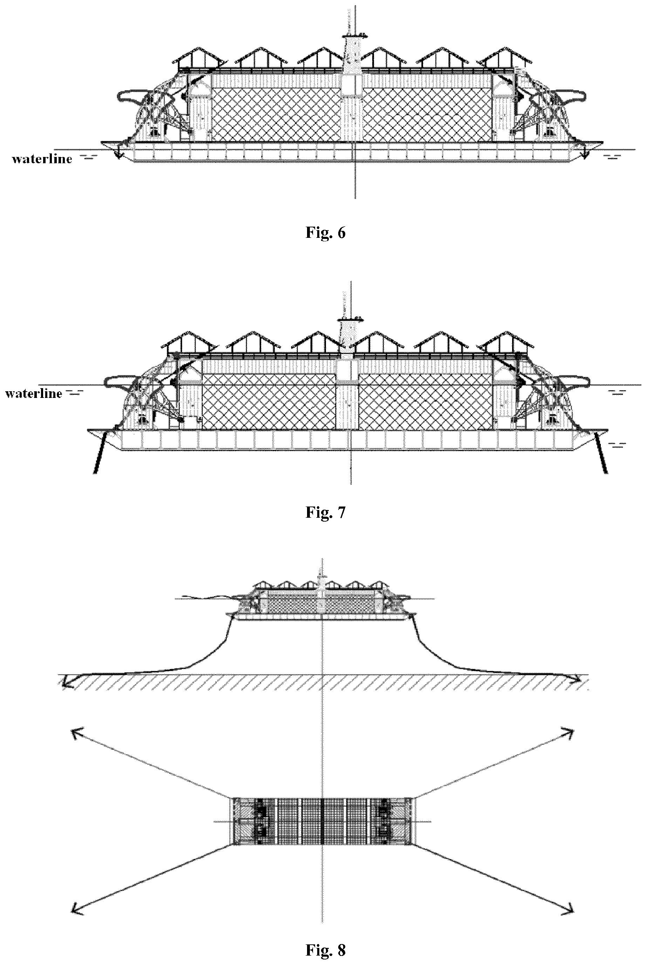

Fig. 6 is a schematic view of the semisubmersible open sea aquaculture cage with combined wave and solar power generation of the present invention before submerging;
Fig. 7 is a schematic view of the semisubmersible open sea aquaculture cage with combined wave and solar power generation of the present invention after submerging;
Fig. 8 is a schematic view of the semisubmersible open sea aquaculture cage with combined wave and solar power generation of the present invention when being used singly; and
Fig. 9 is a schematic view of a multi-body aquacultural platform formed by combining a plurality of the semisubmersible open sea aquaculture cages with combined wave and solar power generation of the present invention.

### DETAILED DESCRIPTION OF THE EMBODIMENTS

The present invention will be described in further detail below with reference to specific embodiments.

The present invention provides a semisubmersible open sea aquaculture cage with combined wave and solar power generation which can be divided into four parts according to functions.

The first part is a semisubmersible hull main structure mainly comprising a frame-based scow 1, a front right curved column 201, a front left curved column 202, a front right column 301, a front middle column 302, a front left column 303, a middle right column 401, a central column 402, a middle left column 403, a rear right column 501, a rear middle column 502, a rear left column 503, a rear right curved column 601, a rear left curved column 602, a front top transverse compartment 12, a middle top transverse compartment 14, a rear top transverse compartment 15, a front right top longitudinal compartment 131, a front left top longitudinal compartment 132, a rear right top longitudinal compartment 133, a rear left top longitudinal compartment 134, a front right curved connecting compartment 111, a front left curved connecting compartment 112, a rear right curved connecting compartment 151, and a rear left curved connecting compartment 152. The above-mentioned units constitute a strong frame-based three-dimensional structure having high strength and stability and reduced consumption of materials. The semisubmersible hull main structure is configured to serve as a carrier for the transportation, towing, maintenance and equipments carrying of the semisubmersible open sea aquaculture cage of the present invention. Rising and submerging of the semisubmersible open sea aquaculture cage is controlled by adjusting ballast water volume in each of the compartments. Before the cage is put into operation in open sea, the frame-based scow 1 provides the buoyant force allowing the whole cage to float, such that people can get on the cage, just like they are boarding a normal ship, to carry out their work. After the cage is put into operation in a designated area in open sea, it can slowly submerge to a designed operational level by pumping water into the compartments to reduce the buoyant force of the semisubmersible hull main structure. The pumping water into the compartments is performed from bottom up gradually, during which people should be mindful of keeping the cage balanced. Each sub-structure of the semisubmersible hull is provided with a plurality of individual compartments, each compartment being communicated with a water pipe and an air pipe. A pump compartment is disposed in the central column 402, and disposed in the pump compartment are a water pump for water pumping and drainage, pipelines, valves, a hydraulic pump station for the valves and a water pumping/drainage control system. The pipelines in the pump compartment are communicated with the water pipe of each independent compartment, wherein whether each independent compartment is connected to the water pump is controlled by the valves. By opening or closing the valves, water is pumped into or drained off from each independent compartment. The air pipe of each independent compartment directly extends to the top of the open sea aquaculture cage of the present invention to communicate with the atmosphere.

The second part is an aquaculture cage structure. Two netcages, each having a bottom surface and vertical surfaces but without a top surface, are formed with the front right column 301, the front middle column 302, a front transverse tubular buoyancy tank 103 and the front top transverse compartment 12, and with the front left column 303, the middle right column 401, the central column 402, a middle left column 403, a middle transverse tubular buoyancy tank 104, the middle top transverse compartment 14, the rear right column 501, the rear middle column 502, a rear transverse tubular buoyancy tank 105, the rear top transverse compartment 15, the rear left column 503, vertical net structures 34, a front middle bottom net structure 108 and a rear middle bottom net structure 109. Alternatively, the vertical net structure 34 between the middle right column 401 and the central column 402 and the vertical net structure 34 between the central column 402 and the middle left column 403 can be removed, such that the two netcages are combined into one netcage. If the mesh sizes of the net structures are not appropriate, fish farmers may apply conventional nets of different mesh sizes to the net structures as required for different sizes or kinds of fish. By introducing the net structures, fixed nets are used instead of floating nets in the open sea cage, so as to solve the problem that a floating net will move violently in big waves and thereby may wrap the fish inside and kill them; moreover, the service lives of the nets are improved greatly, which solves the problem of frequent replacement of the nets in the conventional cages and thus the cost is reduced.

The third part is a renewable energy power generation system mainly comprising a wave power generation system and a solar power generation system. A front eagle-type wave-absorbing floating body 9 is mounted at the front end of the semisubmersible open sea aquaculture cage and connected to a truss-type support arm 901, and performs reciprocating rotation around a hinge 10 under the action of waves, so as to drive a hydraulic cylinder 19, which is mounted between a back of the front eagle-type wave-absorbing floating body 9 and the front top transverse compartment 12, to perform reciprocating motion, and thereby wave energy is converted into hydraulic energy. And then the hydraulic energy is converted into electric power by a power conversion system mounted inside the compartment. Similarly, a rear eagle-type wave-absorbing floating body 17 is mounted at the rear end of the cage and accordingly converting wave energy into electric power. The front and rear eagle-type wave-absorbing floating bodies may share one energy conversion system which can collect and convert energy from multiple eagle-type wave-absorbing floating bodies into electric power. A large number of solar panels which can convert solar energy into electric power are disposed at the top of the semisubmersible open sea aquaculture cage. A power storage design has been introduced in the renewable energy power generation system, such that besides regular power supply the surplus electric power from wave energy and solar energy can be stored in batteries for later use when wave energy and solar energy are insufficient. In addition to solar power generation, people can also mount small-size wind power generation devices at the top of the cage. As there are abundant wave energy, solar energy and wind energy at seas, the open sea aquaculture cage of the present invention makes full use of its surroundings and converts the renewable energy into electric power for the productions and livings on the cage, which guarantees the power supply without polluting. It is expected that the semisubmersible open sea aquaculture cage of the present invention can produce power satisfying its own power demand, and even surplus electric power. Moreover, since wave power generation helps reducing the energy of the waves, it is good for protecting the fish.

The whole aquaculture cage can surface and be anchored just like a normal ship, which allows towing and maintenance of the cage. The aquaculture cage can submerse to a designed level to serve as a semisubmersible discharge device and an aquaculture cage.

The aquaculture cage structure and the renewable energy power generation system can be expanded as required. Particularly, the two netcages in the middle of the semisubmersible hull main structure can be expanded to their left and right sides as required, so that the two netcages is expanded to six netcages. Frames of the expanded netcages of both sides can be retracted to the middle netcages, or be extended out of the middle netcages to increase the area of the netcages. Similarly, the wave power generation system and the solar power generation system can also be extended.

The fourth part refers to the anchoring equipments. Four sets of anchoring systems are disposed at four corners of the top of the semisubmersible open sea aquaculture cage, respectively. Each anchoring system comprises an anchor windlass, an anchor, an anchor chain, a chain pipe, a chain locker, a roller, and a hydraulic pump station for the anchor windlass. When the cage is put into operation in a specified sea area, the anchors are initially dropped through the anchor windlass such that the cage is anchored to the seabed. The number of anchors dropped and the lengths of the anchor chains can be determined based on the water depth and weather conditions. The anchor windlass is arranged at the top of the aquaculture cage, so that it is always above sea surface such that it is accessible to the workers.

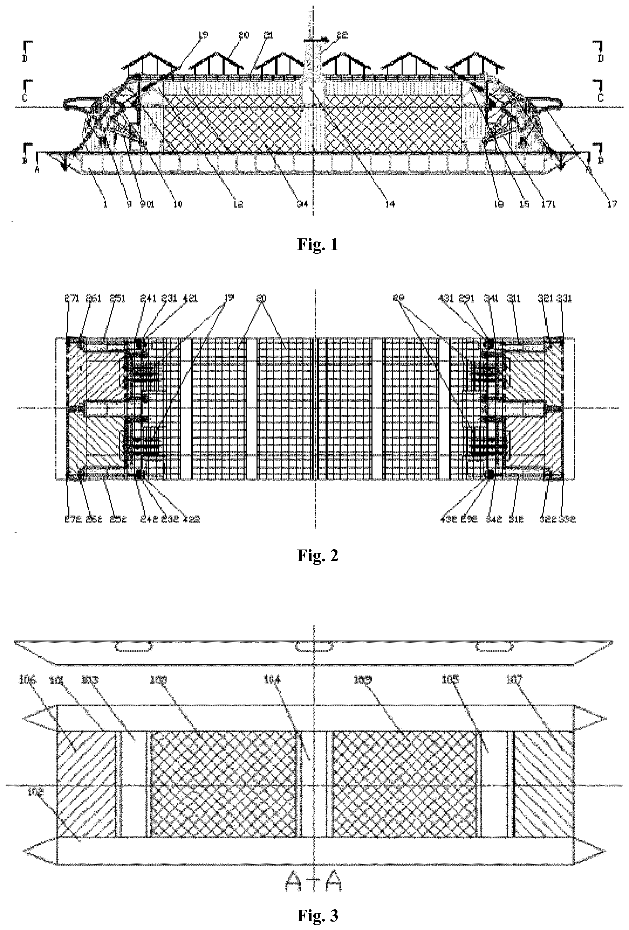

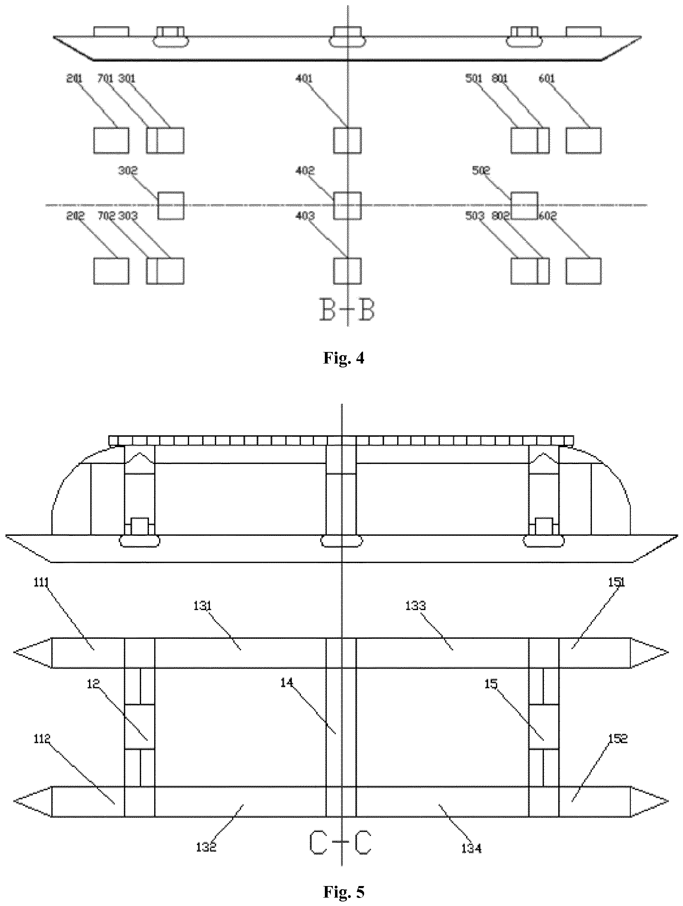

In a preferred embodiment, as shown in Figs. 1 to 5, a specific structure of the semisubmersible open sea aquaculture cage of the present invention is as follows. The frame-based scow 1 is constituted of a right longitudinal tubular buoyancy tank 101, a left longitudinal tubular buoyancy tank 102, a front transverse tubular buoyancy tank 103, a middle transverse tubular buoyancy tank 104, and a rear transverse tubular buoyancy tank 105. The interiors of the above buoyancy tanks are divided into a plurality of individually adjustable compartments, wherein the buoyancy force of each buoyancy tank is adjusted by pumping water into/out of the compartments. The frame-based scow 1 provides a sufficient buoyancy force to support structures and equipments disposed on it. A front plate structure 106, a rear plate structure 107, a front middle bottom net structure 108 and a rear middle bottom net structure 109 are located within the frames of the frame-based scow 1. In order to facilitate towing, two ends of both the right longitudinal tubular buoyancy tank 101 and the left longitudinal tubular buoyancy tank 102 are designed to be pointed which can reduce resistance. A front right curved column 201, a front left curved column 202, a front right chain locker 701, a front left chain locker 702, a front right column 301, a front middle column 302, a front left column 303, a middle right column 401, a central column 402, a middle left column 403, a rear right column 501, a rear middle column 502, a rear left column 503, a rear right chain locker 801, a rear left chain locker 802, a rear right curved column 601 and a rear left curved column 602 are respectively arranged on the frame-based scow 1 in the longitudinal direction. The interiors of the columns are divided into a plurality of individually adjustable compartments, wherein the buoyancy force of each column is adjusted by pumping water into/out of the compartments. A front eagle-type wave-absorbing floating body 9 which is mounted between the front right curved column 201 and the front left curved column 202, is connected to a truss-type support arm 901, and the whole is located between the front right column 301, the front middle column 302 and the front left column 303 through a hinge 10. A rear eagle-type wave-absorbing floating body 17 which is mounted between the rear right curved column 601 and the rear left curved column 602, is connected to a truss-type support arm 171, and the whole is located between the rear right column 501, the rear middle column 502 and the rear left column 503 through a hinge 18. A front top transverse compartment 12 is arranged at the tops of the front right column 301, the front middle column 302 and the front left column 303 along the transverse width of the scow. A middle top transverse compartment 14 is arranged at the tops of the middle right column 401, the central column 402 and the middle left column 403 along the transverse width of the scow. A rear top transverse compartment 15 is arranged at the tops of the rear right column 501, the rear middle column 502 and the rear left column 503 along the transverse width of the scow. A hydraulic cylinder 19 is mounted between the back of the front eagle-type wave-absorbing floating body 9 and the front top transverse compartment 12, wherein the front top transverse compartment 12 is designed to have an A-shaped strong structure for mounting a base of the hydraulic cylinder 19. A hydraulic cylinder 28 is mounted between the back of the rear eagle-type wave-absorbing floating body 17 and the rear top transverse compartment 15, wherein the rear top transverse compartment 15 is designed to have an A-shaped strong structure for mounting a base of the hydraulic cylinder 28. A front right top longitudinal compartment 131 and a front left top longitudinal compartment 132 are arranged between the front top transverse compartment 12 and the middle top transverse compartment 14. A rear right top longitudinal compartment 133 and a rear left top longitudinal compartment 134 are arranged between the rear top transverse compartment 15 and the middle top transverse compartment 14. A front right curved connecting compartment 111 is arranged between the front top transverse compartment 12 and the front right curved column 201. A front left curved connecting compartment 112 is arranged between the front top transverse compartment 12 and the front left curved column 202. A rear right curved connecting compartment 151 is arranged between the rear top transverse compartment 15 and the rear right curved column 601. A rear left curved connecting compartment 152 is arranged between the rear top transverse compartment 15 and the rear left curved column 602. At the tops of the front top transverse compartment 12, the middle top transverse compartment 14, the rear top transverse compartment 15, the front right top longitudinal compartment 131, the front left top longitudinal compartment 132, the rear right top longitudinal compartment 133 and the rear left top longitudinal compartment 134, a plurality of solar power rooms 20 are arranged along the transverse direction, and safety rails 21 are provided. A mast 22 is disposed in the middle of the middle top transverse compartment 14. A front right anchor windlass 231 and a front left anchor windlass 232 are respectively disposed at two sides of the front top transverse compartment 12. A rear right anchor windlass 291 and a rear left anchor windlass 292 are respectively disposed at two sides of the rear top transverse compartment 15. The front right anchor windlass 231 is provided with a front right anchor chain 241. One end of the front right anchor chain 241 is directed from an upper platform to the front end of the right longitudinal tubular buoyancy tank 101 by a chain pipe 251 which is mounted inside the front right curved connecting compartment 111 and the front right curved column 201, and connected to a front right anchor 271 via a front right roller 261; the other end of the front right anchor chain 241 is connected to the interior of the front right chain locker 701 through a front right vertical chain pipe 421. The front left anchor windlass 232 is provided with a front left anchor chain 242. One end of the front left anchor chain 242 is directed from the upper platform to the front end of the left longitudinal tubular buoyancy tank 102 by a chain pipe 252 which is mounted inside the front left curved connecting compartment 112 and the front left curved column 202, and connected to a front left anchor 272 via a front left roller 262; the other end of the front left anchor chain 242 is connected to the interior of the front left chain locker 702 through a front left vertical chain pipe 422. The rear right anchor windlass 291 is provided with a rear right anchor chain 301. One end of the rear right anchor chain 301 is directed from the upper platform to the rear end of the right longitudinal tubular buoyancy tank 101 by a rear right chain pipe 431 which is mounted inside the rear right curved connecting compartment 151 and the rear right curved column 601, and connected to a rear right anchor 331 via a rear right roller 321; the other end of the rear right anchor chain 301 is connected to the interior of the rear right chain locker 801 through a rear right vertical chain pipe 431. The rear left anchor windlass 292 is provided with a rear left anchor chain 302. One end of the rear left anchor chain 302 is directed from the upper platform to the rear end of the longitudinal left tubular buoyancy tank 102 by a rear left chain pipe 432 which is mounted inside the rear left curved connecting compartment 152 and the rear left curved column 602, and connected to a rear left anchor 332 via a rear left roller 322; the other end of the rear left anchor chain 302 is connected to the interior of the rear left chain locker 802 through a rear left vertical chain pipe 432. Vertical net structures 34 are respectively disposed between the front right column 301, the front middle column 302, the front transverse tubular buoyancy tank 103 and the front top transverse compartment 12, between the front left column 303, the front middle column 302, the front transverse tubular buoyancy tank 103 and the front top transverse compartment 12, between the middle right column 401, the central column 402, the front transverse tubular buoyancy tank 103 and the front top transverse compartment 12, between the middle left column 403, the central column 402, the middle transverse tubular buoyancy tank 104 and the middle top transverse compartment 14, between the rear right column 501, the rear middle column 502, the rear transverse tubular buoyancy tank 105 and the rear top transverse compartment 15, and between the rear left column 503, the rear middle column 502, the rear transverse tubular buoyancy tank 105 and the rear top transverse compartment 15.

The cage of the present invention has a frame-based main structure, which is simple and can be divided into a plurality of compartments as required to improve the safety and the water pumping and drainage controllability. People can introduce multiple eagle-type wave-absorbing floating bodies based on the size of the constructed cage. People can also mount small-size wind power generation devices and sea water desalting devices at the top of the cage, and mount water pumping and drainage systems, electrical systems, fishing machineries and living facilities in the compartments.

The semisubmersible open sea aquaculture cage with combined wave and solar power generation of the present invention can be constructed in a shipyard just like a conventional ship, and the simple structure allows rapid construction and mass construction. After the construction is complete, the semisubmersible open sea aquaculture cage, carrying various devices, materials, and baits required by aquaculture, will be towed to an aquaculture area and put into operation with the following steps. First, dropping an anchor by using the anchor windlasses to release the anchor chains to a preset length, and then locking the anchor chains; pumping water into the compartments of the main structure from bottom up gradually by the water pumping and drainage system; after the cage submerges to the preset water level, trimming the cage and stopping pumping water into the compartments; and thereby the cage is ready for aquaculture. The solar power generation devices start working once the construction of the cage is complete; and the wave power generation devices start working when the cage submerges to the preset water level. If the cage needs to be transferred when a disaster such as typhoon is coming, people can pump the water out of the compartments gradually from up to down through the water pumping and drainage system such that the cage will surface and then be towed away to avoid the disaster. The cage can also be provided with propellers for self-propulsion.

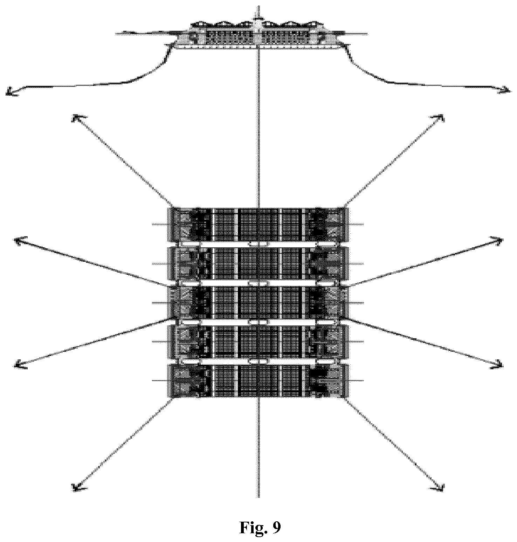

As shown in Figs. 9 and 10, the semisubmersible open sea aquaculture cage with combined wave and solar power generation can be used singly, or form a multi-body aquacultural platform by combining a plurality of the semisubmersible open sea aquaculture cages.

The semisubmersible open sea aquaculture cage with combined wave and solar power generation of the present invention is a novel open sea aquaculture cage, and there is no similar design at present. The development and application of the cage of the present invention provides an advanced device for the marine aquaculture industry, which can produce enormous economic benefits and strongly promote the development of the marine aquaculture industry, and therefore has a profound significance.

The foregoing detailed descriptions are specific illustration of feasible embodiments of the present invention which are not intended to limit the scope of the present invention. Any equivalent embodiments or modifications without departing from the present invention shall fall within the scope of the present claims.

## Claims

1. A semisubmersible open sea aquaculture cage with combined wave and solar power generation, wherein the semisubmersible open sea aquaculture cage comprises a semisubmersible hull main structure, an aquaculture cage structure, a renewable energy power generation system and an anchoring system;
the semisubmersible hull main structure is configured to serve as a carrier for the aquaculture cage structure, the renewable energy power generation system and the anchoring systems, and comprises multiple compartments wherein rising and submerging of the semisubmersible open sea aquaculture cage is controlled by adjusting ballast water volume in each of the compartments;
the aquaculture cage structure comprises vertical net structures (34) and bottom net structures (108, 109), the vertical net structures and the bottom net structures being connected to the semisubmersible hull main structure to form netcages having bottom surfaces and vertical surfaces but without a top surface;
the renewable energy power generation system comprises a wave power generation system and a solar power generation system, wherein the wave power generation system is disposed at front and back ends of the semisubmersible hull main structure, and the solar power generation system is disposed at the top of the semisubmersible hull main structure;
the anchoring system is disposed at four corners of the top of the semisubmersible hull main structure;
the aquaculture cage structure comprises a front middle bottom net structure (108) and a rear middle bottom net structure (109);
the front middle bottom net structure (108) and the rear middle bottom net structure (109) are disposed within the frames of the frame-based scow (1); the semisubmersible hull main structure comprises a frame-based scow (1), the frame-based scow (1) being constituted of a right longitudinal tubular buoyancy tank (101), a left longitudinal tubular buoyancy tank (102), a front transverse tubular buoyancy tank (103), a middle transverse tubular buoyancy tank (104), and a rear transverse tubular buoyancy tank (105); a front plate structure (106) and a rear plate structure (107) are located within frames of the frame-based scow (1);
the semisubmersible open sea aquaculture cage being **characterized in that**:
two ends of both the right longitudinal tubular buoyancy tank (101) and the left longitudinal tubular buoyancy tank (102) are designed to be pointed which can reduce resistance;
a front right curved column (201), a front left curved column (202), a front right column (301), a front middle column (302), a front left column (303), a middle right column (401), a central column (402), a middle left column (403), a rear right column (501), a rear middle column (502), a rear left column (503), a rear right curved column (601) and a rear left curved column (602) are respectively disposed on the frame-based scow (1) in the longitudinal direction; interiors of the buoyancy tanks and the columns are divided into multiple individually adjustable compartments, wherein buoyancy force is adjusted by pumping water into or out of the compartments;
a front top transverse compartment (12) is disposed at the tops of the front right column (301), the front middle column (302) and the front left column (303) along the transverse width of the frame-based scow (1); a middle top transverse compartment (14) is disposed at the tops of the middle right column (401), the central column (402) and the middle left column (403) along the transverse width of the frame-based scow (1); a rear top transverse compartment (15) is disposed at the tops of the rear right column (501), the rear middle column (502) and the rear left column (503) along the transverse width of the frame-based scow (1);
a front right top longitudinal compartment (131) and a front left top longitudinal compartment (132) are disposed between the front top transverse compartment (12) and the middle top transverse compartment (14); a rear right top longitudinal compartment (133) and a rear left top longitudinal compartment (134) are disposed between the rear top transverse compartment (15) and the middle top transverse compartment (14); a front right curved connecting compartment (111) is disposed between the front top transverse compartment (12) and the front right curved column (201); a front left curved connecting compartment (112) is disposed between the front top transverse compartment (12) and the front left curved column (202); a rear right curved connecting compartment (151) is disposed between the rear top transverse compartment (15) and the rear right curved column 601; a rear left curved connecting compartment (152) is disposed between the rear top transverse compartment (15) and the rear left curved column (602);
the vertical net structures (34) are respectively disposed between the front right column (301), the front middle column (302), the front transverse tubular buoyancy tank (103) and the front top transverse compartment (12), between the front left column (303), the front middle column (302), the front transverse tubular buoyancy tank (103) and the front top transverse compartment (12), between the middle right column (401), the central column (402), the front transverse tubular buoyancy tank (103) and the front top transverse compartment (12), between the middle left column (403), the central column (402), the middle transverse tubular buoyancy tank (104) and the middle top transverse compartment (14), between the rear right column (501), the rear middle column (502), the rear transverse tubular buoyancy tank (105) and the rear top transverse compartment (15), and between the rear left column (503), the rear middle column (502), the rear transverse tubular buoyancy tank (105) and the rear top transverse compartment (15); and wherein
the wave power generation system comprises a front eagle-type wave-absorbing floating body (9), a truss-type support arm (901), a first hinge (10), a rear eagle-type wave-absorbing floating body (17), a truss-type support arm (171), a second hinge (18), a first hydraulic cylinder (19), and a second hydraulic cylinder (28);
the front eagle-type wave-absorbing floating body (9) is disposed between the front right curved column (201) and the front left curved column (202), connected to the truss-type support arm (901), and located between the front right column (301), the front middle column (302) and the front left column (303) through the first hinge (10);
the rear eagle-type wave-absorbing floating body (17) is disposed between the rear right curved column (601) and the rear left curved column (602), connected to the truss-type support arm (171), and located between the rear right column (501), the rear middle column (502) and the rear left column (503) through the second hinge (18);
the first hydraulic cylinder (19) is disposed between the back of the front eagle-type wave-absorbing floating body (9) and the front top transverse compartment (12), wherein the front top transverse compartment (12) is designed to have an A-shaped strong structure for mounting a base of the first hydraulic cylinder (19); the second hydraulic cylinder (28) is disposed between the back of the rear eagle-type wave-absorbing floating body (17) and the rear top transverse compartment (15), wherein the rear top transverse compartment (15) is designed to have an A-shaped strong structure for mounting a base of the second hydraulic cylinder (28).

2. The semisubmersible open sea aquaculture cage with combined wave and solar power generation according to claim 1, **characterized in that**,
the solar power generation system comprises multiple solar power rooms (20), safety rails (21), and a mast (22);
the multiple solar power rooms and the safety rails are disposed at the tops of the front top transverse compartment (12), the middle top transverse compartment (14), the rear top transverse compartment (15), the front right top longitudinal compartment (131), the front left top longitudinal compartment (132), the rear right top longitudinal compartment (133) and the rear left top longitudinal compartment (134), along the transverse direction; the mast (22) is disposed in the middle of the middle top transverse compartment (14).

3. The semisubmersible open sea aquaculture cage with combined wave and solar power generation according to claim 2, **characterized in that**,
the anchoring system comprises a front right anchor windlass (231), a front left anchor windlass (232), a rear right anchor windlass (291), a rear left anchor windlass (292), a front right anchor chain (241), a front right chain pipe (251), a front right roller (261), a front right anchor (271), a front right vertical chain pipe (421), a front right chain locker (701), a front left anchor chain (242), a front left chain pipe (252), a front left roller (262), a front left anchor (272), a front left vertical chain pipe (422), a front left chain locker (702), a rear right anchor chain (341), a rear right chain pipe (311), a rear right roller (321), a rear right anchor (331), a rear right vertical chain pipe (431), a rear right chain locker (801), a rear left anchor chain (342), a rear left chain pipe (312), a rear left roller (322), a rear left anchor (332), a rear left vertical chain pipe (432), and a rear left chain locker (802);
the front right anchor windlass (231) and the front left anchor windlass (232) are respectively disposed at two sides of the front top transverse compartment (12); the rear right anchor windlass (291) and the rear left anchor windlass (292) are respectively disposed at two sides of the rear top transverse compartment (15); the front right anchor windlass (231) is provided with the front right anchor chain (241); one end of the front right anchor chain (241) is directed from an upper platform to the front end of the right longitudinal tubular buoyancy tank (101) by the front right chain pipe (251) which is disposed inside the front right curved connecting compartment (111) and the front right curved column (201), and connected to the front right anchor (271) via the front right roller (261); the other end of the front right anchor chain (241) is connected to the interior of the front right chain locker (701) through the front right vertical chain pipe (421); the front left anchor windlass (232) is provided with the front left anchor chain (242); one end of the front left anchor chain (242) is directed from the upper platform to the front end of the left longitudinal tubular buoyancy tank (102) by the front left chain pipe (252) which is disposed inside the front left curved connecting compartment (112) and the front left curved column (202), and connected to the front left anchor (272) via the front left roller (262); the other end of the front left anchor chain (242) is connected to the interior of the front left chain locker (702) through the front left vertical chain pipe (422); the rear right anchor windlass (291) is provided with the rear right anchor chain (341); one end of the rear right anchor chain (341) is directed from the upper platform to the rear end of the right longitudinal tubular buoyancy tank (101) by the rear right chain pipe (311) which is disposed inside the rear right curved connecting compartment (151) and the rear right curved column (601), and connected to the rear right anchor (331) via the rear right roller (321); the other end of the rear right anchor chain (341) is connected to the interior of the rear right chain locker (801) through the rear right vertical chain pipe (431); the rear left anchor windlass (292) is provided with the rear left anchor chain (342); one end of the rear left anchor chain (342) is directed from the upper platform to the rear end of the longitudinal left tubular buoyancy tank (102) by the rear left chain pipe (312) which is disposed inside the rear left curved connecting compartment (152) and the rear left curved column (602), and connected to the rear left anchor (332) via the rear left roller (322); the other end of the rear left anchor chain (342) is connected to the interior of the rear left chain locker (802) through the rear left vertical chain pipe (432).

## Patentansprüche

1. Halb eintauchbarer Hochsee-Aquakulturkäfig mit kombinierter Wellen- und Solarenergieerzeugung, wobei
der halb eintauchbare Hochsee-Aquakulturkäfig eine halb eintauchbare Bootskörperhauptstruktur, eine Aquakulturkäfigstruktur, ein Energieerzeugungssystem für erneuerbare Energie und ein Verankerungssystem umfasst;
die halb eintauchbare Bootskörperhauptstruktur dafür ausgebildet ist, als ein Träger für die Aquakulturkäfigstruktur, das Energieerzeugungssystem für erneuerbare Energie und die Verankerungssysteme zu dienen, und mehrere Abteile umfasst, wobei Anheben und Absenken des halb eintauchbaren Hochsee-Aquakulturkäfigs durch Anpassen eines Ballastwasservolumens in jedem der Abteile gesteuert wird;
die Aquakulturkäfigstruktur vertikale Netzstrukturen (34) und Bodennetzstrukturen (108, 109) umfasst, wobei die vertikalen Netzstrukturen und die Bodennetzstrukturen mit der halb eintauchbaren Bootskörperhauptstruktur verbunden sind, um Netzkäfige mit Bodenflächen und vertikalen Flächen aber ohne eine obere Fläche zu bilden;
das Energieerzeugungssystem für erneuerbare Energie ein Wellenenergieerzeugungssystem und ein Solarenergieerzeugungssystem umfasst, wobei das Wellenenergieerzeugungssystem an einem vorderen und einem hinteren Ende der halb eintauchbaren Bootskörperhauptstruktur angeordnet ist und das Solarenergieerzeugungssystem an der Oberseite der halb eintauchbaren Bootskörperhauptstruktur angeordnet ist;
das Verankerungssystem an vier Ecken der Oberseite der halb eintauchbaren Bootskörperhauptstruktur angeordnet ist;
die Aquakulturkäfigstruktur eine vordere mittlere Bodennetzstruktur (108) und eine hintere mittlere Bodennetzstruktur (109) umfasst; die vordere mittlere Bodennetzstruktur (108) und die hintere mittlere Bodennetzstruktur (109) in den Rahmen des rahmenbasierten Flachboots (1) angeordnet sind;
die halb eintauchbare Bootskörperhauptstruktur ein rahmenbasiertes Flachboot (1) umfasst, wobei das rahmenbasierte Flachboot (1) aus einem rechten längsgerichteten röhrenförmigen Auftriebstank (101), einem linken längsgerichteten röhrenförmigen Auftriebstank (102), einem vorderen quergerichteten röhrenförmigen Auftriebstank (103); einem mittleren quergerichteten röhrenförmigen Auftriebstank (104) und einem hinteren quergerichteten röhrenförmigen Auftriebstank (105) besteht; eine vordere Plattenstruktur (106) und eine hintere Plattenstruktur (107) in Rahmen des rahmenbasierten Flachboots (1) angeordnet sind; der halb eintauchbare Hochsee-Aquakulturkäfig **dadurch gekennzeichnet ist, dass** zwei Enden des rechten längsgerichteten röhrenförmigen Auftriebstanks (101) und des linken längsgerichteten röhrenförmigen Auftriebstanks (102) dafür ausgebildet sind, spitz zulaufend zu sein, wodurch Widerstand verringert werden kann;
eine vordere rechte gekrümmte Säule (201), eine vordere linke gekrümmte Säule (202), eine vordere rechte Säule (301), eine vordere mittlere Säule (302), eine vordere linke Säule (303), eine mittlere rechte Säule (401), eine zentrale Säule (402), eine mittlere linke Säule (403), eine hintere rechte Säule (501), eine hintere mittlere Säule (502), eine hintere linke Säule (503), eine hintere rechte gekrümmte Säule (601) und eine hintere linke gekrümmte Säule (602) jeweils an dem rahmenbasierten Flachboot (1) in der Längsrichtung angeordnet sind;
Innenräume der Auftriebstanks und der Säulen in mehrere individuell anpassbare Abteile aufgeteilt sind, wobei Auftriebskraft durch Pumpen von Wasser in die oder aus den Abteile(n) angepasst wird;
ein vorderes oberes Querabteil (12) an den Oberseiten der vorderen rechten Säule (301), der vorderen mittleren Säule (302) und der vorderen linken Säule (303) entlang der Querbreite des rahmenbasierten Flachboots (1) angeordnet ist; ein mittleres oberes Querabteil (14) an den Oberseiten der mittleren rechten Säule (401), der zentralen Säule (402) und der mittleren linken Säule (403) entlang der Querbreite des rahmenbasierten Flachboots (1) angeordnet ist; ein hinteres oberes Querabteil (15) an den Oberseiten der hinteren rechten Säule (501), der hinteren mittleren Säule (502) und der hinteren linken Säule (503) entlang der Querbreite des rahmenbasierten Flachboots (1) angeordnet ist;
ein vorderes rechtes oberes Längsabteil (131) und ein vorderes linkes oberes Längsabteil (132) zwischen dem vorderen oberen Querabteil (12) und dem mittleren oberen Querabteil (14) angeordnet sind; ein hinteres rechtes oberes Längsabteil (133) und ein hinteres linkes oberes Längsabteil (134) zwischen dem hinteren oberen Querabteil (15) und dem mittleren oberen Querabteil (14) angeordnet sind; ein vorderes rechtes gekrümmtes Verbindungsabteil (111) zwischen dem vorderen oberen Querabteil (12) und der vorderen rechten gekrümmten Säule (201) angeordnet ist; ein vorderes linkes gekrümmtes Verbindungsabteil (112) zwischen dem vorderen oberen Querabteil (12) und der vorderen linken gekrümmten Säule (202) angeordnet ist; ein hinteres rechtes gekrümmtes Verbindungsabteil (151) zwischen dem hinteren oberen Querabteil (15) und der hinteren rechten gekrümmten Säule 601 angeordnet ist; ein hinteres linkes gekrümmtes Verbindungsabteil (152) zwischen dem hinteren oberen Querabteil (15) und der hinteren linken gekrümmten Säule (602) angeordnet ist;
die vertikalen Netzstrukturen (34) jeweils zwischen der vorderen rechten Säule (301), der vorderen mittleren Säule (302), dem vorderen quergerichteten röhrenförmigen Auftriebstank (103) und dem vorderen oberen Querabteil (12), zwischen der vorderen linken Säule (303), der vorderen mittleren Säule (302), dem vorderen quergerichteten röhrenförmigen Auftriebstank (103) und dem vorderen oberen Querabteil (12), zwischen der mittleren rechten Säule (401), der zentralen Säule (402), dem vorderen quergerichteten röhrenförmigen Auftriebstank (103) und dem vorderen oberen Querabteil (12), zwischen der mittleren linken Säule (403), der zentralen Säule (402), dem mittleren quergerichteten röhrenförmigen Auftriebstank (104) und dem mittleren oberen Querabteil (14), zwischen der hinteren rechten Säule (501), der hinteren mittleren Säule (502), dem hinteren quergerichteten röhrenförmigen Auftriebstank (105) und dem hinteren oberen Querabteil (15) und zwischen der hinteren linken Säule (503), der hinteren mittleren Säule (502), dem hinteren quergerichteten röhrenförmigen Auftriebstank (105) und dem hinteren oberen Querabteil (15) angeordnet sind; und wobei
das Wellenenergieerzeugungssystem einen vorderen wellenabsorbierenden Schwimmkörper (9) vom Eagle-Typ, einen Tragarm (901) vom Fachwerktyp, ein erstes Gelenk (10), einen hinteren wellenabsorbierenden Schwimmkörper (17) vom Eagle-Typ, einen Tragarm (171) vom Fachwerktyp, ein zweites Gelenk (18), einen ersten Hydraulikzylinder (19) und einen zweiten Hydraulikzylinder (28) umfasst;
der vordere wellenabsorbierende Schwimmkörper (9) vom Eagle-Typ zwischen der vorderen rechten gekrümmten Säule (201) und der vorderen linken gekrümmten Säule (202) angeordnet ist, mit dem Tragarm (901) vom Fachwerktyp verbunden ist und sich durch das erste Gelenk (10) zwischen der vorderen rechten Säule (301), der vorderen mittleren Säule (302) und der vorderen linken Säule (303) befindet;
der hintere wellenabsorbierende Schwimmkörper (17) vom Eagle-Typ zwischen der hinteren rechten gekrümmten Säule (601) und der hinteren linken gekrümmten Säule (602) angeordnet ist, mit dem Tragarm (171) vom Fachwerktyp verbunden ist und sich durch das zweite Gelenk (18) zwischen der hinteren rechten Säule (501), der hinteren mittleren Säule (502) und der hinteren linken Säule (503) befindet;
der erste Hydraulikzylinder (19) zwischen der Rückseite des vorderen wellenabsorbierenden Schwimmkörpers (9) vom Eagle-Typ und dem vorderen oberen Querabteil (12) angeordnet ist, wobei das vordere obere Querabteil (12) dafür ausgebildet ist, eine A-förmige feste Struktur zum Befestigen einer Basis des ersten Hydraulikzylinders (19) aufzuweisen; der zweite Hydraulikzylinder (28) zwischen der Rückseite des hinteren wellenabsorbierenden Schwimmkörpers (17) vom Eagle-Typ und dem hinteren oberen Querabteil (15) angeordnet ist, wobei das hintere obere Querabteil (15) dafür ausgebildet ist, eine A-förmige feste Struktur zum Befestigen einer Basis des zweiten Hydraulikzylinders (28) aufzuweisen.

2. Halb eintauchbarer Hochsee-Aquakulturkäfig mit kombinierter Wellen- und Solarenergieerzeugung nach Anspruch 1, **dadurch gekennzeichnet, dass**
das Solarenergieerzeugungssystem mehrere Solarenergieräume (20), Sicherheitsschienen (21) und einen Mast (22) umfasst;
die mehreren Solarenergieräume und die Sicherheitsschienen an den Oberseiten des vorderen oberen Querabteils (12), des mittleren oberen Querabteils (14), des hinteren oberen Querabteils (15), des vorderen rechten oberen Längsabteils (131), des vorderen linken oberen Längsabteils (132), des hinteren rechten oberen Längsabteils (133) und des hinteren linken oberen Längsabteils (134) entlang der Querrichtung angeordnet sind; der Mast (22) in der Mitte des mittleren oberen Querabteils (14) angeordnet ist.

3. Halb eintauchbarer Hochsee-Aquakulturkäfig mit kombinierter Wellen- und Solarenergieerzeugung nach Anspruch 2, **dadurch gekennzeichnet, dass**
das Verankerungssystem eine vordere rechte Ankerwinde (231), eine vordere linke Ankerwinde (232), eine hintere rechte Ankerwinde (291), eine hintere linke Ankerwinde (292), eine vordere rechte Ankerkette (241), ein vorderes rechtes Kettenrohr (251), eine vordere rechte Rolle (261), einen vorderen rechten Anker (271), ein vorderes rechtes vertikales Kettenrohr (421), eine vordere rechte Kettenverriegelung (701), eine vordere linke Ankerkette (242), ein vorderes linkes Kettenrohr (252), eine vordere linke Rolle (262), einen vorderen linken Anker (272), ein vorderes linkes vertikales Kettenrohr (422), eine vordere linke Kettenverriegelung (702), eine hintere rechte Ankerkette (341), ein hinteres rechtes Kettenrohr (311), eine hintere rechte Rolle (321), einen hinteren rechten Anker (331), ein hinteres rechtes vertikales Kettenrohr (431), eine hintere rechte Kettenverriegelung (801), eine hintere linke Ankerkette (342), ein hinteres linkes Kettenrohr (312), eine hintere linke Rolle (322), einen hinteren linken Anker (332), ein hinteres linkes vertikales Kettenrohr (432) und eine hintere linke Kettenverriegelung (802) umfasst;
die vordere rechte Ankerwinde (231) und die vordere linke Ankerwinde (232) jeweils an zwei Seiten des vorderen oberen Querabteils (12) angeordnet sind; die hintere rechte Ankerwinde (291) und die hintere linke Ankerwinde (292) jeweils an zwei Seiten des hinteren oberen Querabteils (15) angeordnet sind; die vordere rechte Ankerwinde (231) mit der vorderen rechten Ankerkette (241) versehen ist; ein Ende der vorderen rechten Ankerkette (241) von einer oberen Plattform zu dem vorderen Ende des rechten längsgerichteten röhrenförmigen Auftriebstanks (101) geführt ist, durch das vordere rechte Kettenrohr (251), das in dem vorderen rechten gekrümmten Verbindungsabteil (111) und der vorderen rechten gekrümmten Säule (201) angeordnet ist und mit dem vorderen rechten Anker (271) über die vordere rechte Rolle (261) verbunden ist; das andere Ende der vorderen rechten Ankerkette (241) mit dem Innenraum der vorderen rechten Kettenverriegelung (701) durch das vordere rechte vertikale Kettenrohr (421) verbunden ist; die vordere linke Ankerwinde (232) mit der vorderen linken Ankerkette (242) versehen ist; ein Ende der vorderen linken Ankerkette (242) von der oberen Plattform zu dem vorderen Ende des linken längsgerichteten röhrenförmigen Auftriebstanks (102) geführt ist, durch das vordere linke Kettenrohr (252), das in dem vorderen linken gekrümmten Verbindungsabteil (112) und der vorderen linken gekrümmten Säule (202) angeordnet ist und mit dem vorderen linken Anker (272) über die vordere linke Rolle (262) verbunden ist; das andere Ende der vorderen linken Ankerkette (242) mit dem Innenraum der vorderen linken Kettenverriegelung (702) durch das vordere linke vertikale Kettenrohr (422) verbunden ist; die hintere rechte Ankerwinde (291) mit der hinteren rechten Ankerkette (341) versehen ist; ein Ende der hinteren rechten Ankerkette (341) von der oberen Plattform zu dem hinteren Ende des rechten längsgerichteten röhrenförmigen Auftriebstanks (101) geführt ist, durch das hintere rechte Kettenrohr (311), das in dem hinteren rechten gekrümmten Verbindungsabteil (151) und der hinteren rechten gekrümmten Säule (601) angeordnet ist und mit dem hinteren rechten Anker (331) über die hintere rechte Rolle (321) verbunden ist; das andere Ende der hinteren rechten Ankerkette (341) mit dem Innenraum der hinteren rechten Kettenverriegelung (801) durch das hintere rechte vertikale Kettenrohr (431) verbunden ist; die hintere linke Ankerwinde (292) mit der hinteren linken Ankerkette (342) versehen ist; ein Ende der hinteren linken Ankerkette (342) von der oberen Plattform zu dem hinteren Ende des längsgerichteten linken röhrenförmigen Auftriebstanks (102) geführt ist, durch das hintere linke Kettenrohr (312), das in dem hinteren linken gekrümmten Verbindungsabteil (152) und der hinteren linken gekrümmten Säule (602) angeordnet ist und mit dem hinteren linken Anker (332) über die hintere linke Rolle (322) verbunden ist; das andere Ende der hinteren linken Ankerkette (342) mit dem Innenraum der hinteren linken Kettenverriegelung (802) durch das hintere linke vertikale Kettenrohr (432) verbunden ist.

## Revendications

1. Cage d'aquaculture de haute mer semi-submersible combinant la génération d'énergie houlomotrice et d'énergie solaire,
la cage d'aquaculture de haute mer semi-submersible comprenant une structure principale de coque semi-submersible, une structure de cage d'aquaculture, un système de génération d'énergie renouvelable et un système d'ancrage ;
la structure principale de coque semi-submersible étant configurée pour servir de support pour la structure de cage d'aquaculture, le système de génération d'énergie renouvelable et le système d'ancrage, et comprenant de multiples compartiments, la montée et l'immersion de la cage d'aquaculture de haute mer semi-submersible étant commandées par ajustement du volume d'eau de ballast dans chacun des compartiments ;
la structure de cage d'aquaculture comprenant des structures de filet verticales (34) et des structures de filet de fond (108, 109), les structures de filet verticales et les structures de filet de fond étant reliées à la structure principale de coque semi-submersible pour former des cages à filets ayant des surfaces de fond et des surfaces verticales, mais sans surface supérieure ;
le système de génération d'énergie renouvelable comprenant un système de génération d'énergie houlomotrice et un système de génération d'énergie solaire, le système de génération d'énergie houlomotrice étant disposé aux extrémités avant et arrière de la structure principale de coque semi-submersible, et le système de génération d'énergie solaire étant disposé à la partie supérieure de la structure principale de coque semi-submersible ;
le système d'ancrage étant disposé à quatre coins de la partie supérieure de la structure principale de coque semi-submersible ; la structure de cage d'aquaculture comprenant une structure de filet de fond centrale avant (108) et une structure de filet de fond centrale arrière (109) ; la structure de filet de fond centrale avant (108) et la structure de filet de fond centrale arrière (109) étant disposées à l'intérieur des cadres du chaland à cadres (1) ;
la structure principale de coque semi-submersible comprenant un chaland à cadres (1), le chaland à cadres (1) étant constitué d'un réservoir de flottabilité tubulaire longitudinal droit (101), d'un réservoir de flottabilité tubulaire longitudinal gauche (102), d'un réservoir de flottabilité tubulaire transversal avant (103), d'un réservoir de flottabilité tubulaire transversal central (104) et d'un réservoir de flottabilité tubulaire transversal arrière (105) ; une structure de plaque avant (106) et une structure de plaque arrière (107) étant situées à l'intérieur des cadres du chaland à cadres (1) ; la cage d'aquaculture de haute mer semi-submersible étant **caractérisée par le fait que** deux extrémités à la fois du réservoir de flottabilité tubulaire longitudinal droit (101) et du réservoir de flottabilité tubulaire longitudinal gauche (102) sont conçues pour être pointues, ce qui permet de réduire la résistance ;
une colonne incurvée droite avant (201), une colonne incurvée gauche avant (202), une colonne droite avant (301), une colonne centrale avant (302), une colonne gauche avant (303), une colonne droite centrale (401), une colonne centrale (402), une colonne gauche centrale (403), une colonne droite arrière (501), une colonne centrale arrière (502), une colonne gauche arrière (503), une colonne incurvée droite arrière (601) et une colonne incurvée gauche arrière (602) étant respectivement disposées sur le chaland à cadres (1) dans la direction longitudinale ; des intérieurs des réservoirs de flottabilité et des colonnes étant divisés en multiples compartiments ajustables individuellement, une force de flottabilité étant ajustée par pompage d'eau dans ou hors des compartiments ;
un compartiment transversal supérieur avant (12) étant disposé aux parties supérieures de la colonne droite avant (301), de la colonne centrale avant (302) et de la colonne gauche avant (303) le long de la largeur transversale du chaland à cadres (1) ; un compartiment transversal supérieur central (14) étant disposé aux parties supérieures de la colonne droite centrale (401), de la colonne centrale (402) et de la colonne gauche centrale (403) le long de la largeur transversale du chaland à cadres (1) ; un compartiment transversal supérieur arrière (15) étant disposé aux parties supérieures de la colonne droite arrière (501), de la colonne centrale arrière (502) et de la colonne gauche arrière (503) le long de la largeur transversale du chaland à cadres (1) ;
un compartiment longitudinal supérieur droit avant (131) et un compartiment longitudinal supérieur gauche avant (132) étant disposés entre le compartiment transversal supérieur avant (12) et le compartiment transversal supérieur central (14) ; un compartiment longitudinal supérieur droit arrière (133) et un compartiment longitudinal supérieur gauche arrière (134) étant disposés entre le compartiment transversal supérieur arrière (15) et le compartiment transversal supérieur central (14) ; un compartiment de liaison incurvé droit avant (111) étant disposé entre le compartiment transversal supérieur avant (12) et la colonne incurvée droite avant (201) ; un compartiment de liaison incurvé gauche avant (112) étant disposé entre le compartiment transversal supérieur avant (12) et la colonne incurvée gauche avant (202) ; un compartiment de liaison incurvé droit arrière (151) étant disposé entre le compartiment transversal supérieur arrière (15) et la colonne incurvée droite arrière (601) ; un compartiment de liaison incurvé gauche arrière (152) étant disposé entre le compartiment transversal supérieur arrière (15) et la colonne incurvée gauche arrière (602) ;
les structures de filet verticales (34) étant disposées respectivement entre la colonne droite avant (301), la colonne centrale avant (302), le réservoir de flottabilité tubulaire transversal avant (103) et le compartiment transversal supérieur avant (12), entre la colonne gauche avant (303), la colonne centrale avant (302), le réservoir de flottabilité tubulaire transversal avant (103) et le compartiment transversal supérieur avant (12), entre la colonne droite centrale (401), la colonne centrale (402), le réservoir de flottabilité tubulaire transversal avant (103) et le compartiment transversal supérieur avant (12), entre la colonne gauche centrale (403), la colonne centrale (402), le réservoir de flottabilité tubulaire transversal central (104) et le compartiment transversal supérieur central (14), entre la colonne droite arrière (501), la colonne centrale arrière (502), le réservoir de flottabilité tubulaire transversal arrière (105) et le compartiment transversal supérieur arrière (15), et entre la colonne gauche arrière (503), la colonne centrale arrière (502), le réservoir de flottabilité tubulaire transversal arrière (105) et le compartiment transversal supérieur arrière (15) ; et
le système de génération d'énergie houlomotrice comprenant un corps flottant d'absorption de vague de type aigle avant (9), un bras de support de type treillis (901), une première charnière (10), un corps flottant d'absorption de vague de type aigle arrière (17), un bras de support de type treillis (171), une seconde charnière (18), un premier vérin hydraulique (19) et un second vérin hydraulique (28) ;
le corps flottant d'absorption de vague de type aigle avant (9) étant disposé entre la colonne incurvée droite avant (201) et la colonne incurvée gauche avant (202), relié au bras de support de type treillis (901), et situé entre la colonne droite avant (301), la colonne centrale avant (302) et la colonne gauche avant (303) par l'intermédiaire de la première charnière (10) ; le corps flottant d'absorption de vague de type aigle arrière (17) étant disposé entre la colonne incurvée droite arrière (601) et la colonne incurvée gauche arrière (602), relié au bras de support de type treillis (171), et situé entre la colonne droite arrière (501), la colonne centrale arrière (502) et la colonne gauche arrière (503) par l'intermédiaire de la seconde charnière (18) ;
le premier vérin hydraulique (19) étant disposé entre l'arrière du corps flottant d'absorption de vague du type aigle avant (9) et le compartiment transversal supérieur avant (12), le compartiment transversal supérieur avant (12) étant conçu pour avoir une structure solide en forme de A pour monter une base du premier vérin hydraulique (19) ; le second vérin hydraulique (28) étant disposé entre l'arrière du corps flottant d'absorption de vague de type aigle arrière (17) et le compartiment transversal supérieur arrière (15), le compartiment transversal supérieur arrière (15) étant conçu pour avoir une structure solide en forme de A pour monter une base du second vérin hydraulique (28).

2. Cage d'aquaculture de haute mer semi-submersible combinant la génération d'énergie houlomotrice et d'énergie solaire selon la revendication 1, **caractérisée par le fait que**
le système de génération d'énergie solaire comprend de multiples chambres d'énergie solaire (20), des rails de sécurité (21) et un mât (22) ;
les multiples chambres d'énergie solaire et les rails de sécurité sont disposés aux parties supérieures du compartiment transversal supérieur avant (12), du compartiment transversal supérieur central (14), du compartiment transversal supérieur arrière (15), du compartiment longitudinal supérieur droit avant (131), du compartiment longitudinal supérieur gauche avant (132), du compartiment longitudinal supérieur droit arrière (133) et du compartiment longitudinal supérieur gauche arrière (134), le long de la direction transversale ; le mât (22) est disposé au milieu du compartiment transversal supérieur central (14).

3. Cage d'aquaculture de haute mer semi-submersible combinant la génération d'énergie houlomotrice et d'énergie solaire selon la revendication 2, **caractérisée par le fait que**
le système d'ancrage comprend un guindeau d'ancrage droit avant (231), un guindeau d'ancrage gauche avant (232), un guindeau d'ancrage droit arrière (291), un guindeau d'ancrage gauche arrière (292), une chaîne d'ancrage droite avant (241), un conduit de chaîne droit avant (251), un rouleau droit avant (261), un ancrage droit avant (271), un conduit de chaîne vertical droit avant (421), un verrou de chaîne droit avant (701), une chaîne d'ancrage gauche avant (242), un conduit de chaîne gauche avant (252), un rouleau gauche avant (262), un ancrage gauche avant (272), un conduit de chaîne vertical gauche avant (422), un verrou de chaîne gauche avant (702), une chaîne d'ancrage droite arrière (341), un conduit de chaîne droit arrière (311), un rouleau droit arrière (321), un ancrage droit arrière (331), un conduit de chaîne vertical droit arrière (431), un verrou de chaîne droit arrière (801), une chaîne d'ancrage gauche arrière (342), un conduit de chaîne gauche arrière (312), un rouleau gauche arrière (322), un ancrage gauche arrière (332), un conduit de chaîne vertical gauche arrière (432) et un verrou de chaîne gauche arrière (802) ;
le guindeau d'ancrage droit avant (231) et le guindeau d'ancrage gauche avant (232) sont respectivement disposés sur deux côtés du compartiment transversal supérieur avant (12) ; le guindeau d'ancrage droit arrière (291) et le guindeau d'ancrage gauche arrière (292) sont respectivement disposés sur deux côtés du compartiment transversal supérieur arrière (15) ; le guindeau d'ancrage droit avant (231) comporte la chaîne d'ancrage droite avant (241) ; une extrémité de la chaîne d'ancrage droite avant (241) est orientée d'une plate-forme supérieure à l'extrémité avant du réservoir de flottabilité tubulaire longitudinal droit (101) par le conduit de chaîne droit avant (251) qui est situé à l'intérieur du compartiment de liaison incurvé droit avant (111) et de la colonne incurvée droite avant (201), et reliée à l'ancrage droit avant (271) par l'intermédiaire du rouleau droit avant (261) ; l'autre extrémité de la chaîne d'ancrage droite avant (241) est reliée à l'intérieur du verrou de chaîne droit avant (701) par l'intermédiaire du conduit de chaîne vertical droit avant (421) ; le guindeau d'ancrage gauche avant (232) comporte la chaîne d'ancrage gauche avant (242) ; une extrémité de la chaîne d'ancrage gauche avant (242) est orientée de la plate-forme supérieure à l'extrémité avant du réservoir de flottabilité tubulaire longitudinal gauche (102) par le conduit de chaîne gauche avant (252) qui est disposé à l'intérieur du compartiment de liaison incurvé gauche avant (112) et de la colonne incurvée gauche avant (202), et reliée à l'ancrage gauche avant (272) par l'intermédiaire du rouleau gauche avant (262) ; l'autre extrémité de la chaîne d'ancrage gauche avant (242) est reliée à l'intérieur du verrou de chaîne gauche avant (702) par l'intermédiaire du conduit de chaîne vertical gauche avant (422) ; le guindeau d'ancrage droit arrière (291) comporte la chaîne d'ancrage droite arrière (341) ; une extrémité de la chaîne d'ancrage droite arrière (341) est orientée de la plate-forme supérieure à l'extrémité arrière du réservoir de flottabilité tubulaire longitudinal droit (101) par le conduit de chaîne droit arrière (311) qui est disposé à l'intérieur du compartiment de liaison incurvé droit arrière (151) et de la colonne incurvée droite arrière (601), et reliée à l'ancrage droit arrière (331) par l'intermédiaire du rouleau droit arrière (321) ; l'autre extrémité de la chaîne d'ancrage droite arrière (341) est reliée à l'intérieur du verrou de chaîne droit arrière (801) par l'intermédiaire du conduit de chaîne vertical droit arrière (431) ; le guindeau d'ancrage gauche arrière (292) comporte la chaîne d'ancrage gauche arrière (342) ; une extrémité de la chaîne d'ancrage gauche arrière (342) est orientée de la plate-forme supérieure à l'extrémité arrière du réservoir de flottabilité tubulaire gauche longitudinal (102) par le conduit de chaîne gauche arrière (312) qui est disposé à l'intérieur du compartiment de liaison incurvé gauche arrière (152) et de la colonne incurvée gauche arrière (602), et reliée à l'ancrage gauche arrière (332) par l'intermédiaire du rouleau gauche arrière (322) ; l'autre extrémité de la chaîne d'ancrage gauche arrière (342) est reliée à l'intérieur du verrou de chaîne gauche arrière (802) par l'intermédiaire du conduit de chaîne vertical gauche arrière (432).
